**Europäisches Patentamt**

**European Patent Office**

**Office européen des brevets**

(19)

(11) **EP 1 262 031 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(21) Anmeldenummer: **01915012.7**

(22) Anmeldetag: **16.02.2001**

(51) Int Cl.$^7$: **H04B 7/06**

(86) Internationale Anmeldenummer:
**PCT/DE2001/000588**

(87) Internationale Veröffentlichungsnummer:
**WO 2001/063796 (30.08.2001 Gazette 2001/35)**

(54) **DATENÜBERTRAGUNGSVERFAHREN UND -SYSTEM MIT SENDEANTENNEN-DIVERSITÄT**

METHOD AND SYSTEM FOR TRANSMITTING DATA, WITH TRANSMISSION ANTENNA DIVERSITY

PROCEDE ET SYSTEME DE TRANSMISSION DE DONNEES PRESENTANT PLUSIEURS ANTENNES D'EMISSION

(84) Benannte Vertragsstaaten:
**DE FR GB SE**

(30) Priorität: **26.02.2000 DE 10009150**

(43) Veröffentlichungstag der Anmeldung:
**04.12.2002 Patentblatt 2002/49**

(73) Patentinhaber: **ROBERT BOSCH GMBH**
**70442 Stuttgart (DE)**

(72) Erfinder:
- **HANS, Martin**
  **31141 Hildesheim (DE)**
- **KOWALEWSKI, Frank**
  **38228 Salzgitter (DE)**
- **LAUMEN, Josef**
  **31141 Hildesheim (DE)**
- **SCHMIDT, Gunnar**
  **38304 Wolfenbuettel (DE)**
- **BAER, Siegfried**
  **75179 Pforzheim (DE)**
- **BECKMANN, Mark**
  **38102 Braunschweig (DE)**

(56) Entgegenhaltungen:
**WO-A-98/27669          WO-A-99/35764**

- **WITTNEBEN A: "ANALYSIS AND COMPARISON OF OPTIMAL PREDICTIVE TRANSMITTER SELECTIONAND COMBINING DIVERSITY FOR DECT" SINGAPORE, NOV. 14 - 16, 1995,NEW YORK, IEEE,US, 14. November 1995 (1995-11-14), Seiten 1527-1531, XP000623041 ISBN: 0-7803-2510-9**
- **GOLDBERG J ET AL: "DOWNLINK BEAMFORMING FOR CELLULAR MOBILE COMMUNICATIONS" PHOENIX, MAY 4 - 7, 1997,NEW YORK, IEEE,US, Bd. CONF. 47, 4. Mai 1997 (1997-05-04), Seiten 632-636, XP000736684 ISBN: 0-7803-3660-7**

**Beschreibung**

STAND DER TECHNIK

Die Erfindung betrifft ein Datenübertragungsverfahren und system, insbesondere zur Verwendung in einem CDMA-System im TDD-Betrieb, wobei ein Datensignal in Form eines Datenstroms von Datenbursts verschiedener Nutzer zwischen einer ersten Station und einer zweiten Station über eine Mehrzahl von Antennen übertragen wird und wobei in Zusammenhang mit dem jeweiligen Datenburst ein Referenzsignal gesendet wird.

Obwohl prinzipiell auf beliebige Datenübertragungen anwendbar, werden die vorliegende Erfindung sowie die ihr zu Grunde liegende Problematik in Bezug auf ein zellulares CDMA-Datenübertragungssystem (CDMA = Code Division Multiple Access) erläutert, die einen Übertragungsmodus verwenden, der die Übertragung eines Referenzsignals erfordert.

Durch Code-Vielfachzugriff (CDMA = Code Division Multiple Access) lassen sich mehrere Datenströme gleichzeitig über ein gemeinsames Frequenzband übertragen. Dabei werden die zu übertragenden Symbole der Datenströme mit sogenannten Spreizungscodes moduliert.

Die mit verschiedenen Codes gleichzeitig übertragenen Datenströme stören sich i.a. gegenseitig: Mehrwegeausbreitung führt zur Überlagerung von nacheinander gesendeten Datensymbolen (inter symbol interference, ISI). CDMA-Kodierung und Mehrwegeausbreitung sind die Ursache von Mehrfachnutzerinterferenz (multiple access interference, MAI).

Die Interferenzen lassen sich z.B. im Empfänger eliminieren, wenn dort die Impulsantwort des Kanals bekannt ist, wie aus K. D. Kammeyer: "Nachrichtenübertragung", 2. Aufl., Reihe Informationstechnik, Teubner, Stuttgart, 1996 und aus A. Klein, G.K. Kaleh und P.W. Baier: "Zero Forcing and Minimum Mean-Square-Error Equalization for Multiuser Detection in Code Division Multiple Access Channels", IEEE Trans. Vehic. Tech., Bd. 45 (1996), 276-287 entnehmbar. Die Kanalimpulsantwort kann z.B. im Empfänger aus einem empfangenen Referenzsignal geschätzt werden.

Um eine konstant gute Übertragung zu gewährleisten, kann man auch Daten über mehrere Mobilfunkkanäle gleichzeitig übertragen. Dies läßt sich mit mehreren Sendeantennen erreichen (Sendeantennendiversität). Solche Sendeantennendiversität verbessert die Qualität von Mobilfunkkanalübertragungen in bemerkenswerter Weise.

Für CDMA-Mobilfunksysteme im TDD-Bereich sind folgende Sendeantennendiversität-Schemata für die Vorwärtsstrecke (Downlink), also z.B. von einer Basisstation zu einer Mobilstation, bekannt.

Beim Transmit Adaptive Array (TxAA) gemäß Motorola: "Transmit Diversity Schemes applied to the TDD mode (II)", 3GPP TSG RAN WG1 document TSGR1#5(99)632 werden die Signale der einzelnen Nutzer vor ihrer Summation im Basisband mit einem Phasen- und Amplitudenfaktor modifiziert. Die Faktoren sind nutzer- und antennenspezifisch.

Bei der Selection Transmit Diversity (STD) gemäß Motorola: "Transmit Diversity Schemes applied to the TDD mode (II)", 3GPP TSG RAN WG1 document TSGR1#5(99)632 werden die Signale der einzelnen Nutzer immer nur über eine Antenne abgestrahlt. Für verschiedene Nutzer können verschiedene Antennen gewählt werden.

Bei der Phase Alignment Transmit Diversity (PATD) gemäß Motorola: "Transmit Diversity Schemes applied to the TDD mode", 3GPP TSG RAN WG1 document TSGR1#3(99)186 werden die Gesamtantennensignale im Basisband mit einem Phasenfaktor modifiziert. Der Faktor kann für verschiedene Antennen verschieden sein. Er ist für alle Nutzer an einer Antenne identisch.

Bei all diesen Schemata werden die Übertragungsqualitäten der Mobilfunkkanäle in der Gegenstrecke im Sender bestimmt. Aufgrund der gemessenen Qualitäten werden dann die Parameter der Schemata gewählt (Closed Loop-Technik).

Um mit TxAA oder STD versendete Daten nach einem Joint Detection-Verfahren (JD), detektieren zu können, ist es erforderlich, im Empfänger für jeden Nutzer eine eigene Kanalschätzung vorzunehmen.

Bei Verwendung von PATD muß in der Vorwärtsstrecke im JD-Empfänger nur ein Kanal geschätzt werden. Gegenüber TxAA und STD hat PATD jedoch den Nachteil keine Amplitudenmodifizierungen zur Optimierung der Übertragung zu verwenden.

Übliche Diversity-Verfahren zur CDMA-Übertragung in der Vorwärts-strecke im TDD-Betrieb erfordern also entweder einen hohen Kanalschätzungsaufwand im Empfänger (TxAA = Transmit Adaptive Array, STD = Selection Transmit Diversity) oder sollten qualitativ weiter verbessert werden (PATD = Phase Alignment Transmit Diversity).

VORTEILE DER ERFINDUNG

Die der vorliegenden Erfindung zu Grunde liegende Idee besteht darin, daß die Sendesignale der einzelnen Antennen sowohl in ihrer Phase als auch ihrer Amplitude modifiziert werden.

Das erfindungsgemäße Verfahren mit den Merkmalen des Anspruches 1 bzw. die entsprechende Vorrichtung nach Anspruch 6 weisen den besonderen Vorteil auf, daß eine Verbesserung der Datenübertragung durch Senden über mehrere Antennen ohne Notwendigkeit mehrerer Kanalschätzungen in der Vorwärtsstrecke beim JD-Empfang erzielbar ist. Bei Verwendung des Verfahrens in der Vorwärtsstrecke muß im JD-Empfänger nur eine Kanalschätzung vorgenommen werden. Insbesondere ist eine bessere Übertragung als bei Verwendung von PATD möglich.

In den Unteransprüchen finden sich vorteilhafte Weiterbildungen und Verbesserungen des jeweiligen Gegenstandes der Erfindung.

Gemäß einer bevorzugten Weiterbildung werden die Phasen- und Amplitudenfaktoren während aufeinanderfolgender Zeitabschnitte konstant gehalten.

Gemäß einer weiteren bevorzugten Weiterbildung werden die Phasenfaktoren $\varphi_n$ und Amplitudenfaktoren $A_n$ so gewählt, daß eine Maximierung des Produkts

$$P(\varphi_1, \ldots, \varphi_N, A_1, \ldots, A_N) = \prod_{k=1}^{K} \left| \sum_{n=1}^{N} \alpha_n^k \cdot A_n \cdot e^{i\varphi_n} \right|^2$$

durch Variation der antennenspezifischen Phasen $\varphi_n$ und Amplituden $A_n$ unter den Nebenbedingungen

$$\varphi_1 = 0 \text{ und } \sum_{n=1}^{N} A_n^2 = const.$$

erzielt wird, wobei der Kanalschätzungskoeffizient größter Leistung des Kanals von der n-ten Antenne zum k-ten Nutzer mit $\alpha_n^k$ bezeichnet ist und wobei gilt: n = 1, ..., N und k = l,...,K mit N = Anzahl der Antennen und K = Anzahl der Nutzer.

Gemäß einer weiteren bevorzugten Weiterbildung ist die erste Station eine Basisstation und die zweite Station eine Mobilstation eines Mobilfunksystems im TDD-Betrieb, insbesondere eines UMTS-Mobilfunksystems.

Gemäß einer weiteren bevorzugten Weiterbildung wird die Übertragung mittels dem CDMA-Verfahren durchgeführt.

ZEICHNUNGEN

Ein Ausführungsbeispiel der Erfindung ist in der Zeichnung dargestellt und wird in der folgenden Beschreibung näher erläutert.

Es zeigen:

Figur 1     eine schematische Darstellung einer Ausführungsform der erfindungsgemäßen Vorrichtung zum Senden von Daten über eine Mehrzahl von Antennen; und

Figur 2     eine schematische Darstellung des zeitlichen Ablaufs einer Ausführungsform des erfindungsgemäßen Verfahrens zum Senden von Daten über eine Mehrzahl von Antennen unter Benutzung der in Fig. 1 gezeigten Vorrichtung.

BESCHREIBUNG DER AUSFÜHRUNGSBEISPIELE

In den Figuren bezeichnen gleiche Bezugszeichen gleiche oder funktionsgleiche Elemente.

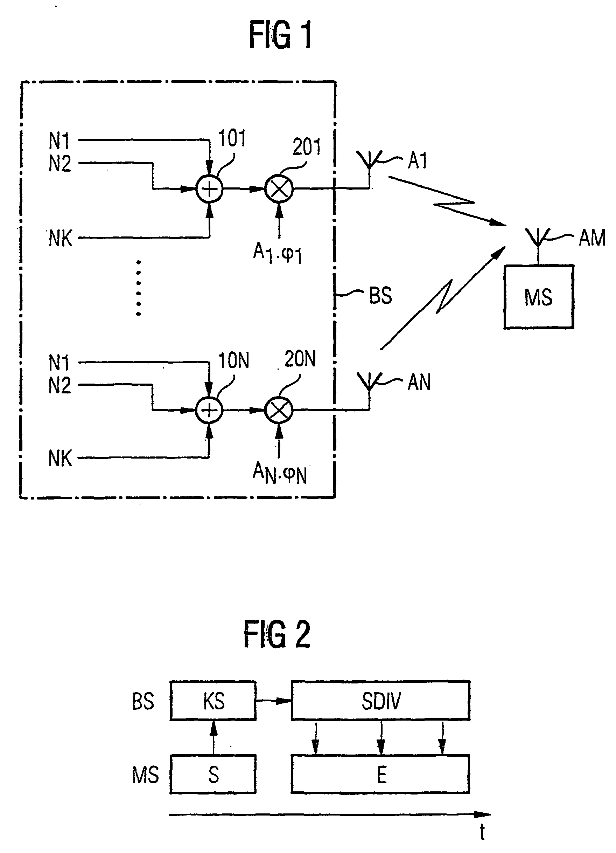

In Fig. 1 und 2 bezeichnen Nl bis NK jeweilige Nutzer der Vorrichtung, 101 bis 10K einen jeweiligen Addierer, 201 bis 20K einen jeweiligen Multiplizierer, A1 bis AN sowie AM eine jeweilige Antenne, BS eine Basisstation, MS eine Mobilstation, S einen Sendeschritt, KS einen Kanalschätzschritt, SDIV einen Sendeschritt mit Antennendiversität und E einen Empfangsschritt.

Bei dieser Ausführungsform handelt es sich um ein UMTS(Universal Mobile Telephone System)-System im TDD-Betrieb, wobei ein Datensignal in Form eines Datenstroms von Datenbursts verschiedener Nutzer zwischen einer Basisstation BS und einer Mobilstation MS über die Mehrzahl von Antennen Al-AN übertragen wird und wobei in Zusammenhang mit dem jeweiligen Datenburst ein Referenzsignal gesendet wird.

Das Senden mit Sendeantennendiversität wird dabei folgendermaßen realisiert.

Es findet zunächst eine Schätzung der Kanäle aller Nutzer N1 bis NK in der Rückwärtsstrecke durch die Basisstation BS anhand eines von der Mobilstation gesendeten Referenzsignals in üblicher Weise statt.

Danach wird eine Bestimmung des Kanalpfades jeweils höchster Leistung für jeden Nutzerkanal durchgeführt. Der zugehörige Kanalschätzungskoeffizient des Kanals von der n-ten Antenne zum k-ten Nutzer sei mit $\alpha_n^k$ bezeichnet, wobei gilt: $n = 1, ..., N$ und $k = 1,...,K$ mit $N$ = Anzahl der Antennen und $K$ = Anzahl der Nutzer (jeweils natürliche Zahlen).

Dann wird eine Maximierung des Produkts

$$P(\varphi_1, ..., \varphi_N, A_1, ..., A_N) = \prod_{k=1}^{K} \left| \sum_{n=1}^{N} \alpha_n^k \cdot A_n \cdot e^{i\varphi_n} \right|^2$$

durch Variation der antennenspezifischen Phasen $\varphi_n$ und Amplituden $A_n$ unter den Nebenbedingungen

$$\varphi_1 = 0 \text{ und } \sum_{n=1}^{N} A_n^2 = \text{const.}$$

durchgeführt.

Anschließend erfolgt die Sendung des durch die Phase $\varphi_n$ und die Amplitude $A_n$ modifizierten Gesamt-CDMA-Signals $A_n \cdot e^{i\varphi_n} \cdot s(t)$, wobei $s(t)$ = Gesamt-CDMA-Signal, über die n-te Sendeantenne der Vorwärtsstrecke, wie in Fig. 1 gezeigt, an die Mobilstation.

Abb. 2 zeigt den zeitlichen Ablauf des Datenübertragungsverfahrens. Gegenüber PATD variiert dieses Verfahren nicht nur die antennenspezifischen Phasen $\varphi_n$, sondern auch die Amplituden $A_n$.

Zunächst sendet die Mobilstation MS einen Datenburst mit einem Referenzsignaldatenblock an die Basisstation BS, welche diesen zur Kanalschätzung verwendet. Basierend auf dem Ergebnis der Kanalschätzung führt die Basisstation die Kanalschätzung KS durch. Dann erfolgt das oben erläuterte Senden von Daten mit Antennendiversität SDIV von der Basisstation an die Mobilstation und der dortige Empfang E.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere kann das erfindungsgemäße Verfahren in allen Datenübertragungssystemen angewendet werden und ist nicht auf CDMA-Datenübertragungssysteme im TDD-Modus beschränkt.

Auch kann das Ermittlungsverfahren für die Amplituden und Phasen variiert werden.

**Patentansprüche**

1. Datenübertragungsverfahren, bei dem die Übertragung mittels eines CDMA-Verfahrens durchgeführt wird, insbesondere zur Verwendung im TDD-Betrieb, wobei ein Datensignal in Form eines Datenstroms von Datenbursts verschiedener Nutzer (N1-NK) zwischen einer ersten Station (BS) und einer zweiten Station (MS) über eine Mehrzahl von Antennen (A1-AN) übertragen wird und wobei in Zusammenhang mit dem jeweiligen Datenburst ein Referenzsignal gesendet wird;
und wobei weiterhin

    i) in einem ersten Schritt ein Referenzsignal von der zweiten Station (MS) an die erste Station (BS) gesendet wird;
    ii) in einem zweiten Schritt in der ersten Station (BS) eine Kanalschätzung (KS) basierend auf dem von der zweiten Station (MS) empfangenen Referenzsignal durchgeführt wird; und
    iii) in einem dritten Schritt die erste Station (BS) einen Datenburst an die zweite Station (MS) über die Mehrzahl von Antennen (A1-AN) sendet, wobei die Sendesignale verschiedener Antennen mit verschiedenen Amplituden- und Phasenfaktoren ($A_n$, $\varphi_n$) entsprechend der Kanalschätzung modifizierbar sind.

2. Verfahren nach Anspruch 1, **dadurch gekennzeichnet, dass** dass die Phasen- und Amplitudenfaktoren während aufeinanderfolgender Zeitabschnitte konstant gehalten werden.

**3.** Verfahren nach Anspruch 1 oder 2, **dadurch gekennzeichnet, dass** die Phasenfaktoren $\varphi_n$ und Amplitudenfaktoren $A_n$ so gewählt werden, dass eine Maximierung des Produkts

$$P(\varphi_1,...,\varphi_N, A_1,...,A_N) = \prod_{k=1}^{K} \left| \sum_{n=1}^{N} \alpha_n^{k} \bullet A_n \bullet e^{i\varphi}_n \right|^2 \cdot$$

durch Variation der antennenspezifischen Phasen $\varphi_n$ und Amplituden $A_n$ unter den Nebenbedingungen

$$\varphi_1 = 0 \text{ und } \sum_{n=1}^{N} A_n^2 = \text{const.}$$

erzielt wird, wobei der Kanalschätzungskoeffizient größter Leistung des Kanals von der n-ten Antenne zum k-ten Nutzer mit $\alpha_n^k$ bezeichnet ist und wobei gilt: n = 1, ..., N und k = l, ... K mit N = Anzahl der Antennen und K = Anzahl der Nutzer.

**4.** Verfahren nach Anspruch 1, 2 oder 3, **dadurch gekennzeichnet, dass** die erste Station (BS) eine Basisstation und die zweite Station (MS) eine Mobilstation eines Mobilfunksystems im TDD-Betrieb, insbesondere eines UMTS-Mobilfunksystems, ist.

**5.** Datenübertragungsvorrichtung, bei der die Übertragung mittels eines CDMA-Verfahrens durchführbar ist, insbesondere zur Verwendung im TDD-Betrieb, wobei ein Datensignal in Form eines Datenstroms von Datenbursts verschiedener Nutzer (N1-NK) zwischen einer ersten Station (BS) und einer zweiten Station (MS) über eine Mehrzahl von Antennen (A1-AN) übertragbar ist und wobei in Zusammenhang mit dem jeweiligen Datenburst ein Referenzsignal sendbar ist;
wobei die erste Station (BS) weiterhin aufweist:

eine Empfangseinrichtung zum Empfangen eines Referenzsignals, das von der zweiten Station (MS) an die erste Station (BS) gesendet wird;

eine Kanalschätzungseinrichtung zum Durchführen einer Kanalschätzung (KS) basierend auf dem von der zweiten Station (MS) empfangenen Referenzsignal; und eine Modifizierungseinrichtung zum Modifizieren der Sendesingale verschiedener Antennen mit verschiedenen Amplituden- und Phasenfaktoren ($A_n$, $\varphi_n$) entsprechend der Kanalschätzung für einen an die zweite Station (MS) über die Mehrzahl von Antennen (Al-AN) zu sendenen Datenburst.

**6.** Vorrichtung nach Anspruch 5, **dadurch gekennzeichnet, dass** die Modifizierungseinrichtung die Phasen- und Amplitudenfaktoren während aufeinanderfolgender Zeitabschnitte konstant hält.

**7.** Vorrichtung nach Anspruch 5 oder 6, **dadurch gekennzeichnet, dass** die Modifizierungseinrichtung die Phasenfaktoren $\varphi_n$ und Amplitudenfaktoren $A_n$ so wählt, das eine Maximierung des Produkts

$$P(\varphi_1,...,\varphi_N, A_1,...,A_N) = \prod_{k=1}^{K} \left| \sum_{n=1}^{N} \alpha_n^{k} \bullet A_n \bullet e^{i\varphi}_n \right|^2$$

durch Variation der antennenspezifischen Phasen $\varphi_n$ und Amplituden An unter den Nebenbedingungen

$$\varphi_1 = 0 \text{ und } \sum_{n=1}^{N} A_n{}^2 = \text{const.}$$

erzielt wird, wobei der Kanalschätzungskoeffizient maximaler Leistung des Kanals von der n-ten Antenne zum k-ten Nutzer mit $\alpha_n{}^k$ bezeichnet ist und wobei gilt: n = l, ..., N und k = l, ..., K mit N = Anzahl der Antennen und K = Anzahl der Nutzer.

**8.** Vorrichtung nach Anspruch 5, 6 oder 7, **dadurch gekennzeichnet, dass** die erste Station (BS) eine Basisstation und die zweite Station (MS) eine Mobilstation eines Mobilfunksystems im TDD-Betrieb, insbesondere eines UMTS-Mobilfunksystems, ist.

**Claims**

**1.** Data transmission method, in which the transmission is carried out by means of a CDMA method, in particular for use in the TDD mode, with a data signal in the form of a data stream of data bursts from different users (N1-NK) being transmitted between a first station (BS) and a second station (MS) via two or more antennas (A1-AN), and with a reference signal being transmitted in conjunction with each data burst;
and in which, furthermore,

> i) in a first step, a reference signal is transmitted from the second station (MS) to the first station (BS);
> ii) in a second step, a channel estimation (KS) is carried out in the first station (BS) on the basis of the reference signal which is received from the second station (MS); and
> iii) in a third step, the first station (BS) transmits a data burst to the second station (MS) via the two or more antennas (A1-AN), in which case the transmission signals from the various antennas can be modified by different amplitude and phase factors ($A_n$, $\varphi_n$), corresponding to the channel estimation.

**2.** Method according to Claim 1, **characterized in that** the phase and amplitude factors are kept constant during successive time periods.

**3.** Method according to Claim 1 or 2, **characterized in that** the phase factors $\varphi_n$ and amplitude factors $A_n$, are chosen so as to maximize the product

$$P(\varphi_1,...,\varphi_N,A_1,...,A_N) = \prod_{k=1}^{K} \left| \sum_{n=1}^{N} \alpha_n{}^k \bullet A_n \bullet e^{i\varphi_n} \right|^2$$

by variation of the antenna-specific phases $\varphi_n$ and amplitudes $A_n$ subject to the secondary conditions

$$\varphi_1 = 0 \text{ and } \sum_{n=1}^{N} A_n{}^2 = \text{const.}$$

with the channel estimation coefficient for the greatest power in the channel from the n-th antenna to the k-th user being denoted $\alpha_n{}^k$ and where: n = 1, ..., N and k = 1, ..., K, and where N = the number of antennas and K = the number of users.

4. Method according to Claim 1, 2 or 3, **characterized in that** the first station (BS) is a base station and the second station (MS) is a mobile station in a mobile radio system in the TDD mode, in particular a UMTS mobile radio system.

5. Data transmission apparatus, in which the transmission can be carried out by means of a CDMA method, in particular for use in the TDD mode, with a data signal in the form of a data stream of data bursts from different users (N1-NK) being able to be transmitted between a first station (BS) and a second station (MS) via two or more antennas (A1-AN), and with a reference signal being able to be transmitted in conjunction with each data burst; with the first station (BS) also having:

   a receiving device for receiving a reference signal which is transmitted from the second station (MS) to the first station (BS);

   a channel estimation device for carrying out a channel estimation process (KS) on the basis of the reference signal which is received from the second station (MS); and a modification device for modification of the transmission signals from various antennas with various amplitude and phase factors ($A_n$, $\varphi_n$) corresponding to the channel estimation for a data burst which is to be transmitted to the second station (MS) via the two or more antennas (A1-AN).

6. Apparatus according to Claim 5, **characterized in that** the modification device keeps the phase and amplitude factors constant during successive time periods.

7. Apparatus according to Claim 5 or 6, **characterized in that** the modification device chooses the phase factors $\varphi_n$ and amplitude factors $A_n$ so as to maximize the product

$$P(\varphi_1,...,\varphi_N, A_1,..., A_N) = \prod_{k=1}^{K} \left| \sum_{n=1}^{N} \alpha_n{}^k \bullet A_n \bullet e^{i\varphi_n} \right|^2$$

by variation of the antenna-specific phases $\varphi_n$ and amplitudes $A_n$ subject to the secondary conditions

$$\varphi_1 = 0 \text{ and } \sum_{n=1}^{N} A_n{}^2 = \text{const.}$$

with the channel estimation coefficient for the greatest power in the channel from the n-th antenna to the k-th user being denoted $\alpha_n{}^k$ and where: n = 1, ..., N and k = 1, ..., K, and where N = the number of antennas and K = the number of users.

8. Apparatus according to Claim 5, 6 or 7, **characterized in that** the first station (BS) is a base station, and the second station (MS) is a mobile station in a mobile radio system in the TDD mode, in particular a UMTS mobile radio system.

**Revendications**

1. Procédé de transmission de données dans lequel la transmission est effectuée par un procédé à accès multiple par répartition en code AMRC en particulier pour utilisation en fonctionnement TDD, un signal de données sous la forme d'un flux de données constitué de paquets de données issues de différents utilisateurs (NI-NK) étant transmis entre une première station (BS) et une deuxième station (MS) par une pluralité d'antennes (AI-AN) avec émission d'un signal de référence en corrélation avec chaque paquet de données, **caractérisé en ce que**

   i) dans une première étape, un signal de référence est envoyé par la deuxième station (MS) à la première station (BS),
   ii) dans une deuxième étape, une évaluation de canal (KS) est effectuée sur la base du signal de référence reçu de la deuxième station, et
   iii) dans une troisième étape, la première station envoie à la deuxième station (MS) un paquet de données par l'intermédiaire de la pluralité d'antennes (AI-AN), les signaux émis par ces différentes antennes avec des facteurs d'amplitude et de phase différents ($A_n$, $\varphi_n$) pouvant être modifiés en correspondance avec l'évaluation de canal.

2. Procédé selon la revendication 1,
   **caractérisé en ce que**
   les facteurs de phase et d'amplitude sont maintenus constants pendant des intervalles de temps qui se succèdent.

3. Procédé selon la revendication 1 ou 2,
   **caractérisé en ce que**
   les facteurs de temps $\varphi_n$ et les facteurs d'amplitude $A_n$ sont choisis de manière à maximaliser le produit

$$P(\varphi_1,...,\varphi_N, A_1,...,A_N) = \prod_{k=1}^{K} \left| \sum_{n=1}^{N} \alpha_n^k \bullet A_n \bullet e^{i\varphi_n} \right|^2$$

en faisant varier les phases $\varphi_n$ et les amplitudes $A_n$ spécifiques à l'antenne, sous les conditions auxiliaires

$$\varphi_1 = 0 \text{ et } \sum_{n=1}^{N} A_n^2 = \text{constante}$$

le coefficient d'évaluation du canal de la plus grande puissance de canal allant de l'antenne d'indice n à l'utilisateur d'indice k étant désigné par $\alpha_n^k$ avec n = 1, ..., N et k = 1, ...K, N étant le nombre des antennes et K celui des utilisateurs.

4. Procédé selon la revendication 1, 2 ou 3,
   **caractérisé en ce que**
   la première station (BS) est une station de base et la deuxième station (MS) est une station mobile d'un système de radio mobile fonctionnant en TDD, en particulier un système de radio mobile UMTS.

5. Dispositif de transmission de données pouvant transmettre les données par un procédé AMRC, notamment pour utilisation en fonctionnement TDD, un signal de données sous la forme d'un flux de données constitué de paquets de données issus des différents utilisateurs (N1-NK) pouvant être transmis entre une première station (BS) et une deuxième station (MS) par une pluralité d'antennes (A1-An) avec émission d'un signal de référence en corrélation avec chaque paquet de données, la première station (BS) comportant de plus :

- un dispositif de réception pour le signal de référence envoyé par la seconde station (MS) à la première (BS),
- un dispositif d'évaluation de canal pour réaliser une évaluation de canal (KS) sur la base du signal de référence reçu de la deuxième station, ainsi qu'un dispositif de modification pour modifier les signaux émis par les différentes antennes avec des facteurs d'amplitude et de phase différents ($A_n$, $\varphi_n$) en correspondance avec l'évaluation de canal pour un paquet de données à envoyer à la seconde station (MS) par la pluralité d'antennes (AI-AN).

6. Dispositif selon la revendication 5,
   **caractérisé en ce que**
   le dispositif de modification maintient constants les facteurs de phase et d'amplitude pendant des intervalles de temps qui se succèdent.

7. Dispositif selon la revendication 5 ou 6,
   **caractérisé en ce que**
   le dispositif de modification choisit les facteurs d'amplitude et de phase de manière à maximaliser le produit.

$$P(\varphi_1,...,\varphi_N, A_1,...,A_N) = \prod_{k=1}^{K} \left| \sum_{n=1}^{N} \alpha_n^k \bullet A_n \bullet e^{i\varphi_n} \right|^2$$

en faisant varier les phases $\varphi_n$ et les amplitudes $A_n$ spécifiques à l'antenne, sous les conditions auxiliaires

$$\varphi_1 = 0 \text{ et } \sum_{n=1}^{N} A_n^2 = \text{constante}$$

le coefficient d'évaluation du canal de la plus grande puissance de canal allant de l'antenne d'indice n à l'utilisateur d'indice k étant désigné par $\alpha_n^k$ avec n = 1, ..., N et k = 1, ...K, N étant le nombre des antennes et K celui des utilisateurs.

8. Dispositif selon la revendication 5, 6 ou 7,
   **caractérisé en ce que**
   la première station (BS) est une station de base et la deuxième station (MS) est une station mobile d'un système de radio mobile fonctionnant en TDD, en particulier un système de radio mobile UMTS.

# FIG 1

# FIG 2